# EUROPÄISCHE PATENTSCHRIFT

(11) **EP 3 772 546 B1**
(45) Veröffentlichungstag und Bekanntmachung des Hinweises auf die Patenterteilung: **26.01.2022**
(21) Anmeldenummer: 19189951.7
(22) Anmeldetag: 05.08.2019
(51) Int. Cl.: C23C 24/04, H02K 15/00

(54) **HERSTELLEN EINER STRUKTUR MITTELS EINES KALTGASSPRITZVERFAHRENS**
FABRICATION OF A STRUCTURE BY MEANS OF A COLD GAS SPRAYING METHOD
FABRICATION D'UNE STRUCTURE AU MOYEN D'UN PROCÉDÉ DE PULVÉRISATION DE GAZ FROID

(43) Veröffentlichungstag der Anmeldung: 10.02.2021
(73) Patentinhaber: Siemens Aktiengesellschaft, 80333 München (DE)
(72) Erfinder: Arndt, Axel, 10961 Berlin (DE); Brach, Karsten, 13589 Berlin (DE); Jensen, Jens Dahl, 14050 Berlin (DE); Krüger, Ursus, 14089 Berlin (DE); Pyritz, Uwe, 13599 Berlin (DE); Rauch, Hartmut, 12203 Berlin (DE); Schneck, Jakob, 10245 Berlin (DE); Stier, Oliver, 12163 Berlin (DE)

(56) Entgegenhaltungen:
- WO-A1-2016/048191
- WO-A1-2017/071794
- VLADIMIR F KOSAREV ET AL: "Recently Patented Facilities and Applications in Cold Spray Engineering", RECENT PATENTS IN ENGINEERING, BENTHAM SCIENCE PUBLISHERS LTD., NL, Bd. 1, 1. Januar 2007 (2007-01-01), Seiten 35-42, XP007915818, ISSN: 1872-2121

## Beschreibung

Beim Aufbau von Strukturen mittels Kaltgasspritzen, insbesondere von dreidimensionalen Strukturen, kommt es teilweise zu Überschneidungen des Verfahrweges außerhalb der Funktionsgeometrie. Dies würde zu unerwünschten Überhöhungen der Struktur führen und birgt die Gefahr von Kollisionen mit dem Spritzwerkzeug.

Wenn komplexe Strukturen gefertigt werden sollen, können Überschneidungen nicht immer vermieden werden. Bisher mussten diese im freien Raum stattfinden, was nicht immer möglich ist, da für die geometrische Abbildung von kaltgasgespritzten Strukturen eine konstante Verfahrgeschwindigkeit ideal und die Geometrie der Struktur oft ein limitierender Faktor ist.

Die WO 2016/048191 A1 offenbart das Aufbringen von elektrisch leitenden Stromschienen auf eine Glasbeschichtung mit niedrigem Emissionsgrad. Ein Verfahren zum Aufbringen elektrisch leitender Stromschienen auf eine Glasoberfläche mit niedrigem Emissionsgrad wird durch ein gasdynamisches Kältesprühverfahren mit Hilfe einer Düse einer gasdynamischen Sprühvorrichtung durchgeführt.

Der Erfindung liegt die Aufgabe zugrunde, ein Verfahren anzugeben, das es ermöglicht komplexe Strukturen effizient mittels eines Kaltgasspritzverfahrens herzustellen.

Diese Aufgabe wird durch ein Verfahren mit den im Anspruch 1 angegebenen Merkmalen gelöst. Das Verfahren zum Herstellen einer Struktur mittels eines Kaltgasspritzverfahrens, umfasst dabei die folgenden Schritte:
- Bereitstellen eines Trägers mit einer Trägeroberfläche, auf die die Struktur mittels des Kaltgasspritzverfahrens durch Abfahren eines Verfahrwegs aufgebracht wird,
- Bereitstellen eines Elements mit einer von der Trägeroberfläche verschiedenen Elementoberfläche, wobei das Element derart im Verfahrweg angeordnet und/oder der Verfahrweg derart festgelegt wird, dass Überschneidungen des Verfahrwegs und/oder Unterbrechungen der Struktur auf der Elementoberfläche angeordnet sind.

Der Verfahrweg ist der Weg, den der Kaltgas-Partikelstrahl auf dem Träger abfährt und entlang dem sich auf dem Träger die Struktur ausbildet. In anderen Worten wird der Verfahrweg mit dem Kaltgas-Partikelstrahl abgefahren. Das KaltgasspritzWerkzeug wird also so bewegt, dass der Kaltgas-Partikelstrahl den Verfahrweg möglichst exakt nachbildet.

Vorzugsweise ist die Trägeroberfläche hinsichtlich einer Beschichtung bzw. eines Strukturaufbaus durch das Kaltgasspritzverfahrens optimiert. Bevorzugt zeichnet sich das Element bzw. dessen Elementoberfläche dadurch aus, dass das Auftragsmaterial nicht an der Oberfläche haften bleibt und es trotzdem dem Materialbeschuss durch den Partikelstrahl zumindest zeitweise standhält. Überschneidungen umfassen dabei Kreuzungen des Verfahrwegs. Überschneidungen können ebenso vollständige und/oder teilweise Überlappungen des Verfahrwegs beinhalten, wenn dieser als Bandstruktur ausgebildet ist und damit eine Breite aufweist.

Das Verfahren hat dabei den Vorteil, dass auch komplexe Strukturen, deren Herstellung viele Überschneidungen bzw. Überschneidungen des Verfahrwegs benötigen, ohne Anpassung des Verfahrwegs gefertigt werden können, da an den Stellen des Verfahrwegs, an denen es zu einem unerwünschten erhöhtem Materialauftrag kommen würde, nur ein stark verringerter oder gar kein Materialauftrag stattfindet. Realisiert wird dies durch die Elementoberfläche, die von der Trägeroberfläche verschieden ausgebildet ist.

In kritischen Bereichen, die vor dem Partikelstrahl geschützt werden müssen, bzw. Überschneidungen oder andere Überhöhungen, die einen übermäßigen Materialauftrag nach sich ziehen, können mittels eines Elements bzw. mehrere Elemente geschützt werden. In dem Beispielfall wird Kupfer als Auftragsmaterial verwendet und als "Opferplatte" eine Glasfaser gefüllte Epoxidharz Hartgewebe-Platte verwendet. Das Element kann weiterhin so angeordnet werden, dass kritische Strukturen, die keinesfalls dem Partikelstrahl ausgesetzt werden dürfen vom Element abgedeckt und damit geschützt werden.

Mit dem vorliegenden Verfahren kann der Verfahrweg also so festgelegt und/oder das Element so angeordnet werden, dass Unterbrechungen der Struktur und/oder Überschneidungen des Verfahrwegs auf der Elementoberfläche des Elements angeordnet sind. Ergänzend oder alternativ zur Wahl der Position eines oder mehrerer Elemente kann auch der Verfahrweg so gewählt bzw. optimiert werden, dass Überschneidungen und/oder Unterbrechungen der Struktur wiederholt auf dem Element angeordnet sind. Da die Elementoberfläche nur eine verringerte bzw. keine Beschichtung durch den Partikelstrahl zulässt können Unterbrechungen, z.B. elektrisch voneinander isolierte TeilStrukturen, einfach realisiert werden.

In einer weiteren Ausführungsform weist die Elementoberfläche im Vergleich zur Trägeroberfläche eine geringere Beschichtbarkeit auf. Die Elementoberfläche ist dabei vorzugsweise so ausgestaltet, dass eine Beschichtung mittels des Kaltgasspritzverfahrens möglichst nicht stattfindet oder deutlich verringert ist.

In einer weiteren Ausführungsform ist die Elementoberfläche als ein Absorber für Partikel des Kaltgasspritzverfahrens ausgebildet. Dies hat den Vorteil, dass sich die Partikel so nicht oder nur in geringem Umfang auf der Oberfläche des Elements ablagern können. Kunststoffe können beispielsweise als ein solcher Absorber dienen.

In einer weiteren Ausführungsform ist die Elementoberfläche so ausgebildet, dass Partikel des Kaltgasspritzverfahrens in die Elementoberfläche eindringen. Dies wird vorzugsweise durch eine Elementoberfläche gelöst, die eine kinetische Verformung der Kaltgas-Partikel nicht ermöglicht, weil sie weich, duktil und/oder elastisch genug ist, um nachzugeben. Hier können neben Kunststoffmaterialien auch elastische Materialien, wie Gummi-Materialien und Komposite, verwendet werden. Die Partikel dringen dementsprechend in die Oberfläche ein, anstatt sich auf ihr abzulagern, und es kann sich dadurch keine Beschichtung und dementsprechend kein - an diesen Stellen unerwünschter - Materialauftrag bilden.

In einer weiteren Ausführungsform weist die Elementoberfläche Kunststoff auf. Insbesondere fasergefüllter Kunststoff hat sich dabei als vorteilhaft erwiesen. Das Element kann vollständig aus Kunststoff, insbesondere aus fasergefülltem Kunststoff, bestehen oder eine Kunststoffschicht an der (Element-)Oberfläche aufweisen. Elementoberfläche aus Kunststoff haben den besonderen Vorteil, dass diese günstig und gut verfügbar sind und einfach auf die Anwendung angepasst werden können bzw. sogar direkt für die Anwendung maßgefertigt werden können (z. B. durch 3D-Druck).

In einer weiteren Ausführungsform wird der Verfahrweg so gewählt, dass die Elementoberfläche des Elements eine optimale Fläche aufweist. Optimal kann die Fläche zum Beispiel dann sein, wenn ihre Fläche minimal ist und ihre Ausdehnung in einer ihrer Dimensionen optimiert wurde. Dies ist abhängig von der zu fertigenden Struktur und je nach Anwendung eine besonders gleichmäßig verteilte, eine besonders kleine und/oder eine Fläche mit einer bestimmten Form sein. Die Anordnung und die Wahl der Fläche kann weiteren Optimierungskriterien und/oder Randbedingungen unterliegen.

Verfahren nach einem der vorhergehenden Ansprüche, wobei der Verfahrweg so gewählt wird, dass die Überschneidungen des Verfahrwegs auf der Elementoberfläche eines einzigen Elements angeordnet sind. Alternativ und/oder ergänzend kann das Element auch so angeordnet bzw. ausgestaltet werden, dass alle Überschneidungen des Verfahrwegs auf dem Element liegen. Alternativ und/oder ergänzend wird der Verfahrweg so festgelegt, dass Unterbrechungen der Struktur innerhalb der Elementoberfläche eines einzigen Elements angeordnet sind. Dies hat den Vorteil, dass nur ein Element angeordnet und dementsprechend weniger effektive Fläche für das Element vorgesehen werden muss.

In einer weiteren Ausführungsform umfasst das Verfahren den Schritt: Herstellen der Struktur mittels Kaltgasspritzen durch Abfahren des Verfahrwegs. Der Partikelstrahl fährt den Verfahrweg ab, wobei sich die Struktur auf der Trägeroberfläche ablagert und damit Schicht für Schicht die Struktur ausbilden. Fährt der Partikelstrahl über die Elementoberfläche, so lagern die Partikel sich nicht darauf ab, sondern dringen z. B. darin ein, wodurch das Element mehrfach im Verfahrweg liegen kann, ohne dass es zu unerwünscht hohem Materialauftrag kommt.

In einer weiteren Ausführungsform wird das Element nach einem Herstellen der Struktur entfernt. Das Element wird dabei insbesondere aus der Struktur entfernt, sodass die Struktur keine Rückstände des Elements aufweist. Alternativ und/oder ergänzend können das Element oder Teile davon auch in der Struktur verbleiben. Das Element oder Teile davon können dabei eine Stützwirkung für die Struktur aufweisen. So kann das Element flexibel während der Herstellung der Struktur eingesetzt werden und weitere Funktionen übernehmen.

In einer weiteren Ausführungsform ist die Struktur ein Wickelkopf für eine elektrische Maschine. Wickelköpfe oder auch Wendebereiche der elektrischen Wicklungen von elektrischen Maschinen weisen durch die zu beachtenden minimalen Biegeradien der üblicherweise verwendeten Kupferleiter eine Grenze bei der minimalen Größe auf, die nicht weiter verkleinert werden kann. Durch Aufbau der Wickelköpfe als Struktur gemäß dem vorliegenden Verfahren brauchen Biegeradien nicht mehr berücksichtigt werden und der für die Wickelköpfe verwendete Bauraum kann erheblich verkleinert werden.

Im Folgenden wird die Erfindung anhand der in den Figuren dargestellten Ausführungsbeispiele näher beschrieben und erläutert. Es zeigen:
- FIG 1: schematisch einen Verfahrweg,
- FIG 2: einen Querschnitt durch einen Träger und ein Element und
- FIG 3: ein Beispiel einer komplexen Struktur.

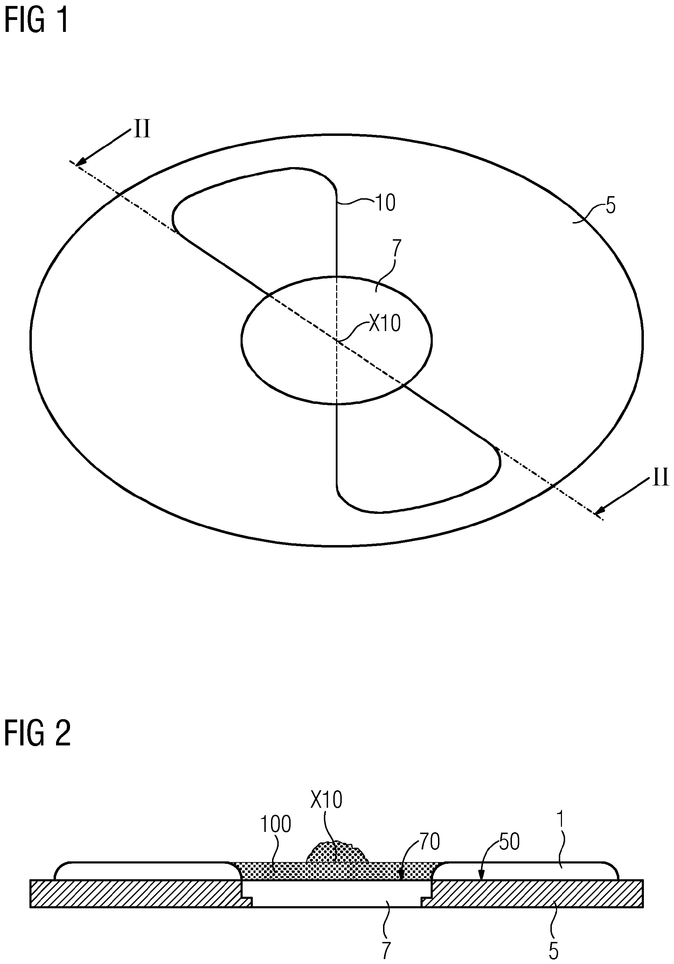

FIG 1 zeigt schematisch einen Verfahrweg 10 einer Struktur 1, die hier nicht gezeigt ist bzw. noch nicht aufgebaut wurde.

Der Verfahrweg 10 befindet sich dabei auf einem Träger 5, in dessen Mitte ein Element 7 angeordnet ist. Der Verfahrweg 10 weist gestrichelte Bereiche auf, die auf dem Element 7 angeordnet sind. An einer Überschneidung X10 kreuzt sich der Verfahrweg 10. An der Überschneidung X10 würde ein unerwünschter Materialauftrag entstehen, was zu einer Kollision mit dem Kaltgasspritzwerkzeug führen könnte. Erfindungsgemäß weist das Element 7 daher eine Elementoberfläche 70 auf, die von einer Elementoberfläche 50 des Trägers 5 verschieden ist.

Dies wird in FIG 2 näher erläutert, wozu in FIG 1 eine Schnittachse II-II eingezeichnet ist.

FIG 2 zeigt einen Schnitt entlang der Schnittachse II-II durch den in FIG 1 gezeigten Träger 5 und das Element 7. Die Darstellung ist dabei nicht maßstabgetreu, um die auftretenden Effekte zu verdeutlichen. Durch das Abfahren des Verfahrwegs 10 entsteht auf dem Träger die Struktur 1. Die Struktur 1 ist in diesem Fall bereits hergestellt und dementsprechend vollständig dargestellt. Ebenfalls zu sehen ist ein unerwünschter Materialauftrag 100, der gepunktet angedeutet ist.

An der Überschneidung X10 ist der Materialauftrag zu hoch, was zu einer Kollision mit dem Kaltgasspritzen Werkzeug führen könnte. Da die Elementoberfläche 70 aber von der Trägeroberfläche 50 verschieden ausgebildet ist, findet auf der Elementoberfläche 70 kein Materialaufbau statt. So kann die Überschneidung X10 mehrfach abgefahren werden ohne dass es zu einem unerwünschten Materialaufbau kommt. Vorzugsweise kann das Element 7 als Epoxidharz Platte ausgebildet sind sein. In diesem Fall ist das Element 7 Scheibenelement ausgebildet und kann in eine Aussparung im Träger 5 eingelegt werden, sodass sich eine ebene Fläche aus der Elementoberfläche 70 und der Trägeroberfläche 50 bildet.

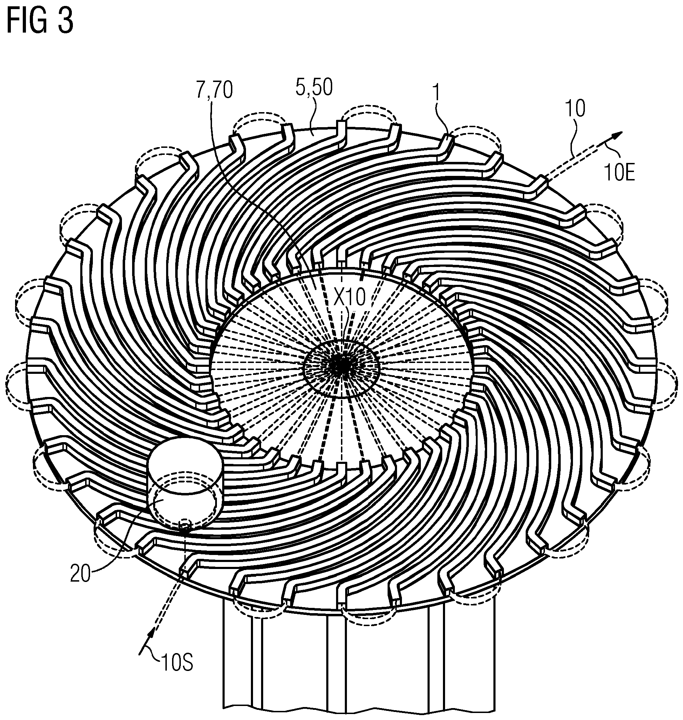

FIG 3 zeigt ein Beispiel einer komplexen Struktur 1, die in diesem Fall als ein Wickelkopf für eine elektrische Maschine ausgebildet ist. Die Windungen des Wickelkopfes werden dabei als Struktur 1 aufgebaut und können bspw. untereinander nicht elektrisch verbunden aufgebaut werden, und z. B. im Anschluss mit den Motorwindungen elektrisch kontaktiert werden. Schematisch angedeutet ist eine Düse 20, die zum Auftragen der Struktur 1 mittels eines Kaltgasspritzverfahrens ausgebildet ist. Die Struktur 1 ist dabei auf einem Träger 5 bzw. dessen Trägeroberfläche 50 angeordnet. Die gestrichelten Teile eines Verfahrwegs 10 deuten an, dass die Struktur 1 mit einer einzigen Bewegung ohne Unterbrechung des Partikelstrahls und ohne Absetzen abgefahren werden kann. Der Verfahrweg weist dazu einen Start 10S und ein Ende 10E auf. Die Düse 20 fährt den Verfahrweg 10 vom Start 10S bis zum Ende 10E in einer Bewegung ab. Ein Element 7 ist hier mittig angeordnet, wobei die Elementoberfläche 70 einen Teil des Verfahrwegs beinhaltet. Überschneidungen X10 des Verfahrwegs sind ebenso angedeutet und liegen gemäß einer Ausführungsform der vorliegenden Erfindung mittig auf der Elementoberfläche 70. Durch die erfindungsgemäße Ausgestaltung des Elements 7, bzw. dessen Elementoberfläche 70, findet auf der Elementoberfläche 70 kein signifikanter Materialauftrag statt und der Verfahrweg 10 kann das Element mehrfach kreuzen. Dies verbessert die Herstellbarkeit von komplexen Strukturen erheblich und erweitert die Freiheitsgrade, die bei der Konstruktion von Strukturen zur Verfügung stehen.

Zusammenfassend betrifft die Erfindung ein Verfahren zum Herstellen einer Struktur 1 mittels eines Kaltgasspritzverfahrens. Um komplexe Strukturen 1 effizient mittels Kaltgasspritzen zu herzustellen werden folgende Schritte vorgeschlagen:
- Bereitstellen eines Trägers 5 mit einer Trägeroberfläche 50, auf die die Struktur 1 mittels des Kaltgasspritzverfahrens durch Abfahren eines Verfahrwegs 10 aufgebracht wird,
- Bereitstellen eines Elements 7 mit einer von der Trägeroberfläche 50 verschiedenen Elementoberfläche 70, wobei das Element 7 derart im Verfahrweg 10 angeordnet und/oder der Verfahrweg 10 derart festgelegt wird, dass Überschneidungen X10 des Verfahrwegs 10 auf der Elementoberfläche 70 angeordnet sind.

## Patentansprüche

1. Verfahren zum Herstellen einer Struktur (1) mittels eines Kaltgasspritzverfahrens, umfassend die Schritte:
- Bereitstellen eines Trägers (5) mit einer Trägeroberfläche (50), auf die die Struktur (1) mittels des Kaltgasspritzverfahrens durch Abfahren eines Verfahrwegs (10) aufgebracht wird,
- Bereitstellen eines Elements (7) mit einer von der Trägeroberfläche (50) verschiedenen Elementoberfläche (70), wobei das Element (7) derart im Verfahrweg (10) angeordnet und/oder der Verfahrweg (10) derart festgelegt wird, dass Überschneidungen (X10) des Verfahrwegs (10) und/oder Unterbrechungen (I10) der Struktur (1) auf der Elementoberfläche (70) angeordnet sind.

2. Verfahren nach Anspruch 1, wobei die Elementoberfläche (70) eine im Vergleich zur Trägeroberfläche (50) geringere Beschichtbarkeit aufweist.

3. Verfahren nach einem der vorhergehenden Ansprüche, wobei die Elementoberfläche (70) als ein Absorber für Partikel des Kaltgasspritzverfahrens ausgebildet ist.

4. Verfahren nach einem der vorhergehenden Ansprüche, wobei die Elementoberfläche (70) so ausgebildet ist, dass Partikel des Kaltgasspritzverfahrens in die Elementoberfläche (70) eindringen.

5. Verfahren nach einem der vorhergehenden Ansprüche, wobei die Elementoberfläche (70) Kunststoff, insbesondere fasergefüllten Kunststoff, aufweist.

6. Verfahren nach einem der vorhergehenden Ansprüche, wobei der Verfahrweg (10) so gewählt wird, dass die Elementoberfläche (70) des Elements (7) eine optimale Fläche aufweist.

7. Verfahren nach einem der vorhergehenden Ansprüche, wobei der Verfahrweg (10) so festgelegt wird, dass die Überschneidungen (X10) des Verfahrwegs (10) und/oder die Unterbrechungen der Struktur (1) auf der Elementoberfläche (70) eines einzigen Elements (7) angeordnet sind.

8. Verfahren nach einem der vorhergehenden Ansprüche, umfassend den Schritt: Herstellen der Struktur (1) mittels des Kaltgasspritzverfahrens durch Abfahren des Verfahrwegs (10).

9. Verfahren nach einem der vorhergehenden Ansprüche, wobei das Element (1) nach einem Herstellen der Struktur (1) entfernt wird.

10. Verfahren nach einem der vorhergehenden Ansprüche, wobei die Struktur (1) ein Wickelkopf für eine elektrische Maschine ist.

## Claims

1. Method for producing a structure (1) by means of a cold gas spraying method, comprising the steps:
- providing a carrier (5) with a carrier surface (50), to which the structure (1) can be attached by means of the cold gas spraying method by following a travel path (10),
- providing an element (7) with an element surface (70) that is different from the carrier surface (50), wherein the element (7) is arranged in the travel path (10) and/or the travel path (10) is specified such that intersections (X10) of the travel path (10) and/or interruptions (110) of the structure (1) are arranged on the element surface (70).

2. Method according to claim 1, wherein the element surface (70) has a lower coatability compared to the carrier surface (50) .

3. Method according to one of the preceding claims, wherein the element surface (70) is embodied as an absorber for particles of the cold gas spraying method.

4. Method according to one of the preceding claims, wherein the element surface (70) is embodied such that particles of the cold gas spraying method penetrate into the element surface (70).

5. Method according to one of the preceding claims, wherein the element surface (70) features plastic, in particular fibre-filled plastic.

6. Method according to one of the preceding claims, wherein the travel path (10) is chosen such that the element surface (70) of the element (7) has an optimal area.

7. Method according to one of the preceding claims, wherein the travel path (10) is specified such that the intersections (X10) of the travel path (10) and/or the interruptions pf the structure (1) are arranged on the element surface (70) of a single element (7).

8. Method according to one of the preceding claims, comprising the step: producing the structure (1) by means of the cold gas spraying method by following the travel path (10) .

9. Method according to one of the preceding claims, wherein the element (1) is removed after producing the structure (1).

10. Method according to one of the preceding claims, wherein the structure (1) is a winding head for an electric machine.

## Revendications

1. Procédé de fabrication d'une structure (1) au moyen d'un procédé de pulvérisation de gaz froid, comprenant les stades :
- on se procure un support (5) ayant une surface (50) de support, sur laquelle on dépose la structure (1) au moyen d'un procédé de pulvérisation de gaz froid en parcourant un trajet (10) de déplacement,
- on se procure un élément (7) ayant une surface (70) d'élément différente de la surface (50) du support, dans lequel on met l'élément (7) dans le trajet (10) de déplacement et/ou on fixe le trajet (10) de déplacement de manière à ce que des intersections (X10) du trajet (10) de déplacement et/ou des interruptions (I10) de la structure (1) soient disposées sur la surface (70) de l'élément.

2. Procédé suivant la revendication 1, dans lequel la surface (70) de l'élément a une aptitude à l'enduction plus petite que la surface (50) du support.

3. Procédé suivant l'une des revendications précédentes, dans lequel la surface (70) de l'élément est constituée sous la forme d'un absorbant de particules du procédé de pulvérisation de gaz froid.

4. Procédé suivant l'une des revendications précédentes, dans lequel la surface (70) de l'élément est constituée de manière à ce que des particules du procédé de pulvérisation de gaz froid pénètrent dans la surface (70) de l'élément.

5. Procédé suivant l'une des revendications précédentes, dans lequel la surface (70) de l'élément comporte de la matière plastique, notamment de la matière plastique chargée de fibres.

6. Procédé suivant l'une des revendications précédentes, dans lequel on choisit le trajet (10) de déplacement de manière à ce que la surface (70) de l'élément (7) ait une surface optimale.

7. Procédé suivant l'une des revendications précédentes, dans lequel on fixe le trajet (10) de déplacement de manière à ce que les intersections (X10) du trajet (10) de déplacement et/ou les interruptions de la structure (1) soient disposées sur la surface (70) d'un élément (7) unique.

8. Procédé suivant l'une des revendications précédentes, comprenant le stade : fabrication de la structure (1) au moyen du procédé de pulvérisation de gaz froid en parcourant le trajet (10) de déplacement.

9. Procédé suivant l'une des revendications précédentes, dans lequel on élimine l'élément (1) après la fabrication de la structure (1).

10. Procédé suivant l'une des revendications précédentes, dans lequel la structure (1) est une tête de bobine d'une machine électrique.
